# EUROPEAN PATENT APPLICATION

(11) **EP 3 816 059 A1**
(43) Date of publication of application: **05.05.2021**
(21) Application number: 20163841.8
(22) Date of filing: 18.03.2020
(51) Int. Cl.: B65D 5/20, B65D 5/56, B65D 77/20, B65D 81/20

(54) **PAPER PRESERVATION BOX**

(30) Priority: 30.10.2019 CN 201911044541
(71) Applicant: Ningbo Freshly Packaging Co., Ltd., Ningbo City, Zhejiang 315000 (CN)
(72) Inventor: SHAN, Chengjun, Ningbo City, Zhejiang 315000 (CN)
(74) Representative: Patentanwälte Gierlich & Pischitzis Partnerschaft mbB

(57) **Abstract**

The present disclosure discloses a paper preservation box comprises a box body (1) formed by trimming and folding a whole paperboard and a thin film layer laminated on the inner surface of the box body (1) through suction or blowing plastic process; the paperboard includes a bottom wall that is square as a whole and serves as the bottom of the box body, left and right side walls connected to the edges of the left and right sides of the bottom wall, and front and rear side walls connected to the edges of the front and rear sides of the bottom wall; joints between the left and right side walls and the front and rear side walls, and the bottom wall all have crease lines (9); the left and right edges of the front and rear side walls are reserved with sheet parts (5) for overlapping to the front and rear edges of the left and right side walls; a flanging (6) formed by joint folding of the outer fringes of the left and right side walls and the front and rear side walls at the upper edge of the box body; the sheet parts (5) after being overlaid to the left and right side walls are subjected to mutual press fit, glue gluing, or ultrasonic bonding. The technical scheme disclosed make it simpler for manufacturing and better in sealing effect and strength and effectively promotes and prolongs shelf life.

## Description

### Technical Field

The present disclosure relates to the technical field of paper lunchboxes, in particular to a paper preservation box.

### Background

With the development of the economy and quickening of pace of life, lunchboxes have been widely used in daily life, mainly serving as take-away packaging boxes and fresh-keeping utensils in refrigerators in supermarkets. The existing lunchboxes mainly can be divided into plastic lunchboxes and paper lunchboxes.

As for the plastic preservation box, benefited by the integrated molding structure and material features, its sealing property and flatness of the upper peripheral edge can be guaranteed, as well as the airtightness of the box laminated with a cover film when food packaging. However, the plastic preservation box, contrary to the concept of the prevailed sustained development due to its material non-renewal and high pollution, has become more and more obsolete. As a result, a paper preservation box emerges in the market to substitute for it.

At current, a paper lunchbox is mainly formed by mutually splicing or gluing one or more film paper into a square or round box body, adhering to a thin film layer inside the box body, and a cover film after putting foods into the box body. Theoretically speaking, the edges of the film paper are mutually spliced so there is no transition clearance, and further, the spliced portions are substantially same in thickness and any overlaying portion is avoided after the thin film layer is adhered to ensure equal thickness of each portion. Therefore, theoretical gaps are prevented because of mutual fit of the cover film and the thin film layer in the process of adhering to the cover film so as to ensure airtightness.

Meanwhile, the edges of the film paper are normally aligned directly, and a thin film layer is glued to realize the connection of aligned portions to meet the requirement of the airtightness. Whereas, it is obvious that as the side walls of the box body tend to expand outward, especially after foods are put in or the put-in foods are too heavy, the thin film layer bears large bilaterally-expanding force at the aligned joints, in this way, the film is easily damaged if it is under a long-term tensioned fatigue state, especially after placement for a long period of time, cracks invisible or visible to eyes occur at the joints to reduce the sealing property, in such a case, the freshness of foods cannot be kept due to invasion of bacteria into the lunchbox during the long-term storage process.

### Summary

As far as the abovementioned problems of the prior art, the present disclosure provides a paper preservation box simple in production process and good in sealing effect, for the purpose of overcoming the foregoing technical defects.

The specific technical solution is as follows:
A paper preservation box comprises a box body formed by trimming and folding a whole paperboard and a thin film layer laminated on the inner surface of the box body through suction plastic process or blowing plastic process; the paperboard includes a bottom wall that is square as a whole and serves as the bottom of the box body, left and right side walls connected to the edges of the left and right sides of the bottom wall, and front and rear side walls connected to the edges of the front and rear sides of the bottom wall; joints between the left and right side walls and the front and rear side walls and the bottom wall all have crease lines.

The left and right edges of the front and rear side walls are reserved with sheet parts for overlapping to the front and rear edges of the left and right side walls; a flanging formed by joint folding of the outer fringes of the left and right side walls and the front and rear side walls at the upper edge of the box body; the sheet parts after being overlaid to the left and right side walls are subjected to mutual press fit, glue gluing, or ultrasonic bonding.

Preferably, the outer fringe of the flanging is further folded downward to form a skirt border. Preferably, the periphery of the thin film layer is glued to the flanging. The paper preservation box also comprises a cover film with its periphery glued to the upper peripheral surface of the thin film layer.

Preferably, the inner side wall of the box body is also provided with an annular step surface which has an L-shaped cross section formed by joint folding of the left and right side walls and the front and rear side walls twice.

Preferably, the lower edges of the sheet parts present in a shape of a folding angle matched with the shapes of the front and rear edges of the left and right side walls.

Preferably, the sheet parts are overlaid to the inner surfaces of the left and right side walls.

Preferably, the cover film and the thin film layer are glued into a whole, and a storage space formed between the thin film layer and the cover film is used for storing foods and inert gas. Preferably, the outer fringe of the flanging is further reversed downward and curled to form a rolled edge.

Preferably, the rolled edge is spiral as a whole in the longitudinal cross section direction.

The above technical solution produces the beneficial effects that:
The paper preservation box comprises the box body and the thin film layer; the box body includes the bottom wall, the front and rear side walls, the left and right side walls and the flanging; the left and right edges of the front and rear side walls are reserved with sheet parts for overlapping to the front and rear edges of the left and right side walls; the box body is formed by trimming and folding a whole paperboard and laminated with the thin film layer on the inner surface of the box body through suction or blowing plastic process, thus the whole production process becomes simpler, sealing effect better, and the four corners of the box body have higher strength. When in use, put the foods into the box body and laminate a cover film so as to compete the preservation packaging of the foods with good sealing property and effectively promoted and prolonged shelf life.

### Brief Description of the Drawings

FIG. 1 is a perspective of a paper preservation box of the present disclosure;
FIG.2 is a perspective of the paper preservation box of the present disclosure, viewed from another angle;
FIG.3 is a top plan view of the paper preservation box of the present disclosure;
FIG.4 is an unfolding plan view of the paper preservation box of the present disclosure;
FIG.5 is a partial enlarged view of portion I in FIG.2;
FIG.6 is a section view of overlaid portions of sheet parts on a flanging of the paper preservation box of the present disclosure;
FIG.7 is a schematically structural diagram of a partial section of the paper preservation box of the present disclosure in another embodiment.

### Detailed Description of the Embodiments

The technical means, creative features, objects and effects of the present disclosure will become more apparent from the following detailed description, which proceeds with reference to the accompanying figures.

### Embodiment One

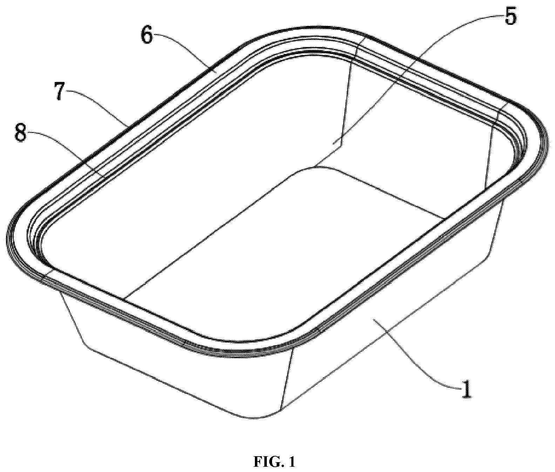

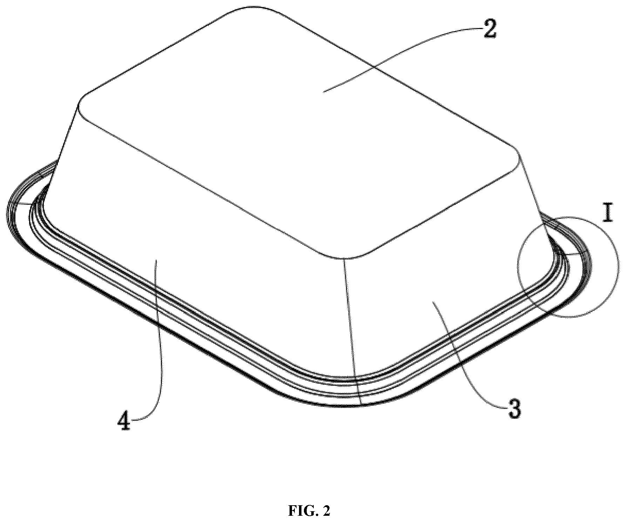

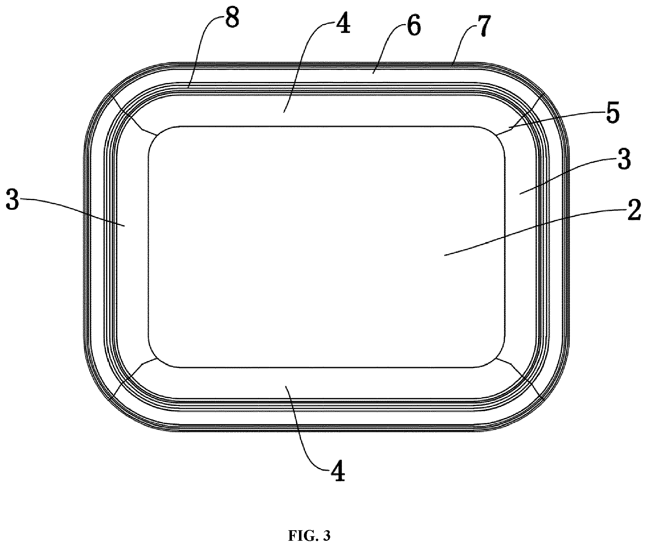

Referring to FIGS. 1-6, the direction outwards vertical to the paper face in FIG.3 is defined as the bottom-to-top direction of the present embodiment, the left-right direction in FIG.3 is the left-right direction of the present embodiment, and the top-to-bottom direction is the rear-to-front direction of the present embodiment.

A paper preservation box provided in this embodiment comprises a box body 1 formed by trimming and folding a whole paperboard and a thin film layer 10 laminated on the inner surface of the box body 1 through suction or blowing plastic process, wherein the paperboard includes a bottom wall 2 that is square as a whole and serves as the bottom of the box body 1, left and right side walls 3 connected to the edges of the left and right sides of the bottom wall 2, and front and rear side walls 4 connected to the edges of the front and rear sides of the bottom wall 2; joints between the left and right side walls 3 and the front and rear side walls 4 and the bottom wall 2 all have crease lines 9; The left and right edges of the front and rear side walls 4 are reserved with sheet parts 5 for overlapping to the front and rear edges of the left and right side walls 3; a flanging 6 formed by joint folding of the outer fringes of the left and right side walls 3 and the front and rear side walls 4 at the upper edge of the box body 1; the sheet parts 5 after being overlaid to the left and right side walls are subjected to mutual press fit, glue gluing, or ultrasonic bonding.

Based on the above technical scheme, the paper preservation box comprises the box body 1 and the thin film layer 10, and the box body 1 includes the bottom wall 2, front and rear side walls 4, left and right side walls 3 and the flanging 6; sheet parts 5 to be overlaid to the left and right side walls 3 are reserved at the left and right edges of the front and rear side walls 4; the box body 1 is formed by trimming and folding a whole paperboard and the thin film layer 10 is laminated on the inner surface of the box body 1 through suction or blowing plastic process, so that the whole production process becomes simpler, sealing effect is better, and the four corners of the box body 1 are more strengthened. Therefore, the box has low possibility of being damaged in transport when the contained foods are too heavy. When in use, foods are put into the box body 1 and then a cover film is laminated so as to compete preservation packaging of the foods, hence, sealing property is good and shelf life can be effectively promoted and prolonged.

In a preferred embodiment, the outer fringe of the flanging 6 is further folded downward to form a skirt border 7 which, on the one hand, further enhances the strength of the box body 1, and on the other hand, facilitates tearing up the cover film in later use so as to open the storage space between the cover film and the thin film layer 10. Besides, the periphery of the thin film layer 10 is glued to the flanging 6. The paper preservation box also comprises a cover film 11 with its periphery glued to the upper peripheral surface of the thin film layer 10. Further, the cover film 11 and the skirt border 7 are glued together.

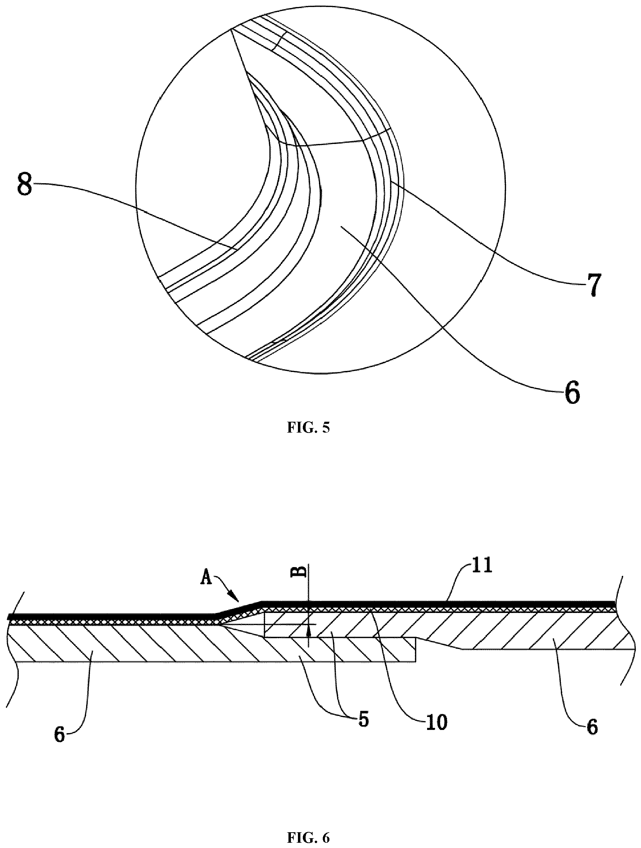

When in specific use, as shown in FIG.6, the relative thickness is exaggerated in order to show the contents clearly; theoretically, relative to the prior art, as the connected location of the flanging in the technical scheme is formed by overlaying two paperboards, the overlaying portion is twice as thick as the paperboard by mutual press fit, glue gluing or ultrasonic bonding, especially a joint of a step structure (as shown as portion B in FIG.6) is inevitably formed at the edge of the sheet part 5 so that a wrinkle (as shown as portion A in FIG.6) is formed at this location after the thin film layer 10 is covered, then the cover film is adhered, and after mutual fit of the cover film and the thin film layer 10, it may have poor sealing property at the fold.

However, in the actual production, a paperboard is often of 0.5mm thick, while the step B formed by mutual overlaying of the sheet parts is merely 0.5mm at most. In the process of performing mould pressing molding of the box body, the step B is compressed to keep its thickness within 0.01mm due to compressibility of the paperboard. At the same time, under the premise that the thin film layer 10 and the cover film 11 are thin enough (e.g., a conventional film is of 0.03mm thick), the said wrinkle can be relatively negligible, especially when the cover film is also laminated at a device. The thin film layer 10 and the cover film 11 can be theoretically glued into a whole by press fit and hot-melting methods so as to completely solve the problem that the two are incapable of being completely sealed due to the fold. In addition, the step B can be further compressed in the press fit process. Shown by the specific production detection result of the technical solution, airtightness at the fold can be ensured to reach the requirement, and the circumstance that the film is damaged in the long-term storage process in the prior art is avoided. Furthermore, the above suction plastic process mainly comprises the following steps:
Step a, trim a paperboard and splice to form a box body 1, put the spliced box body 1 into a suction plastic mould at a suction plastic station, tensioning a film roll material serving as a sheet above the box body 1, and heating and softening the film roll material by a heating component above the film roll material, preferably, the lower surface of the film roll material is provided with glue or the flanging 6 of the box body 1 is coated with glue so that viscidity is better in a heated state;
Step b, performing plastic suction operation on the film roll material by an air extractor at the plastic suction station through cracks (or bleeder holes directly formed on the bottom wall to enhance the plastic suction capability) of the paperboards invisible to eyes, such that the film roll material downward clings to the box body 1 under the effect of the air extractor to form the thin film layer 10, wherein the suction port of the air extractor can be disposed at arbitrary position outside the box body 1; and
Step c, carrying out hot-pressing or ultrasonic bonding on the peripheral fringe of the film glued to the edge.

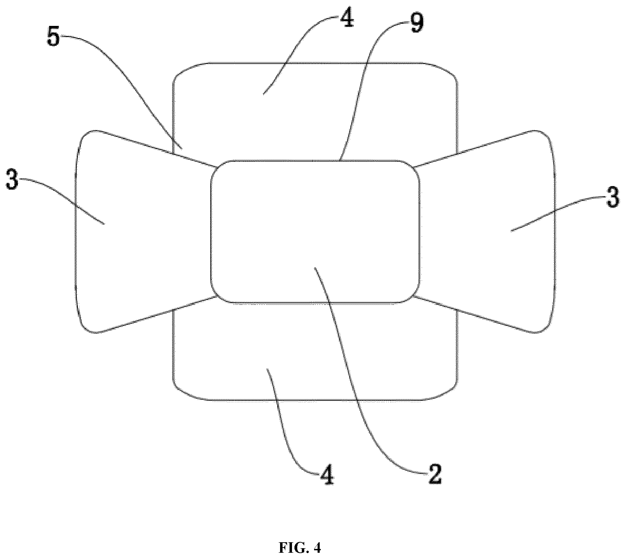

In a preferred embodiment, the inner side wall of the box body 1 is also provided with an annular step face 8 which has an L-shaped cross section formed by joint folding of the left and right side walls 3 and the front and rear side walls 4 twice so that the whole structure of the box body 1 becomes firmer. Further, the lower edges of the sheet parts 5 present in a shape of a break angle matched with the shapes of the front and rear edges of the left and right side walls 3. To be specific, a whole paperboard is cut into the shape as shown in FIG.4, the crease line 9 around the bottom wall 2 is an indentation, and the joints of the left and right side walls 3 and the front and rear side walls 4 are trimmed, that is, the sheet parts 5 are formed by trimming. Further, the sheet parts 5 are overlaid to the inner surfaces of the left and right side walls. The overlaid portion is twice as thick as a paperboard, which thus has better sealing property as compared to the existing method in which the edges of the paperboard are directly aligned and then glued by adhesion of the thin film layer 10. As the paperboard is very thin, normal use of the paper box is not influenced even if the thickness is twice of a paperboard. Further, both the thin film layer 10 and the cover film 11 are made of EVOH, and thus have high barrier property. Further when in practical use, foods and inert gas (preferably nitrogen) are stored in the storage space enclosed by the thin film layer 10 and the cover film 11 so as to effectively prolong the fresh-keeping period of foods.

In the operation of gluing the cover film, foods are placed in the storage space with equipments and air in the storage space is replaced with nitrogen, for one thing, a closed food storage space is formed between the thin film layer and the cover film, for the other thing, air is replaced by inert gas so as to isolate the foods from oxygen, thereby effectively prolonging its shelf life.

### Embodiment Two

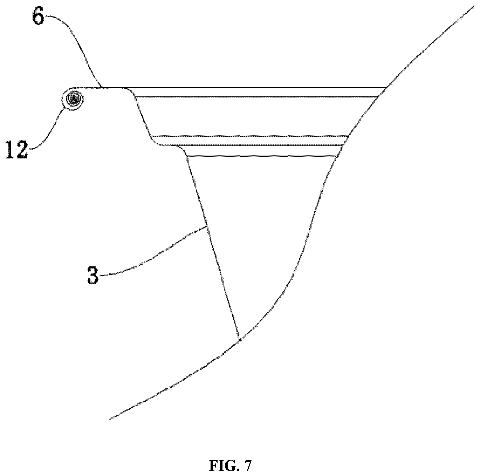

As shown in FIG.7, the paper preservation box provided in this embodiment has substantially the same contents and structure to that in Embodiment One. The only difference lies in that the outer fringe of the flanging 6 is further reversed downward and curled to form a rolled edge 12, thereby greatly enhancing the strength of the edge of the box body, avoiding inward sinking of sides in sealing the cover film 11 and aspirating for gas replacement in the specific usage. The rolled edge 12 is spiral as a whole in the lengthwise section direction. However, it is obvious that the spiral degree of the rolled edge 12 varies along with the whole dimension of the box body, and the rolled edge 12 may be curled only once or more times to form the shape as shown in FIG.7. Due to this rolled edge, the circumstance that multiple box bodies in overlaid packaging are difficult to separate due to airtightness is effectively prevented, therefore, make it more convenient to use. The above merely provides the preferred embodiments of the present disclosure, which is illustrative, rather than restrictive, to the present disclosure. However, it should be understood by those skilled in the art that, many variations, modifications even substitutions that do not depart from the spirit and scope defined by the present disclosure, shall fall into the extent of protection of the present disclosure.

## Claims

1. A paper preservation box, comprising a box body (1), wherein the box body (1) is formed by trimming and folding a whole paperboard and a thin film layer (10) laminated on the inner surface of the box body (1) through suction plastic process; the paperboard includes a bottom wall (2) that is square as a whole and serves as the bottom of the box body (1), left and right side walls (3) connected to the edges of the left and right sides of the bottom wall (2), and front and rear side walls (4) connected to the edges of the front and rear sides of the bottom wall (2); joints between the left and right side walls (3) and the front and rear side walls (4) and the bottom wall (2) all have crease lines (9); the left and right edges of the front and rear side walls (4) are reserved with sheet parts (5) for overlapping to the front and rear edges of the left and right side walls (3); a flanging (6) formed by joint folding of the outer fringes of the left and right side walls (3) and the front and rear side walls (4) at the upper edge of the box body (1); the sheet parts (5) after being overlaid to the left and right side walls (3) are subjected to mutual press fit, glue gluing, or ultrasonic bonding.

2. The paper preservation box of claim 1, wherein the outer fringe of the flanging (6) is further folded downward to form a skirt border (7).

3. The paper preservation box of claim 1, wherein the periphery of the thin film layer (10) is glued to the flanging (6), the said paper preservation box also comprises a cover film (11), the periphery of the cover film (11) is glued to the upper peripheral surface of the thin film layer (10).

4. The paper preservation box of claim 2 or claim 3, wherein the inner side wall of the box body (1) is also provided with an annular step surface (8) which has an L-shaped cross section formed by joint folding of the left and right side walls (3) and the front and rear side walls (4) twice.

5. The paper preservation box of claim 1, wherein the lower edges of the sheet parts (5) present in a shape of a folding angle matched with the shapes of the front and rear edges of the left and right side walls (3).

6. The paper preservation box of claim 5, wherein the sheet parts (5) are overlaid to the inner surfaces of the left and right side walls (3).

7. The paper preservation box of claim 3, wherein the cover film (11) and the thin film layer (10) are glued into a whole, and a storage space formed between the thin film layer (10) and the cover film (11) is used for storing foods and inert gas.

8. The paper preservation box of claim 1, wherein the outer fringe (6) of the flanging is further reversed downward and curled to form a rolled edge (12).

9. The paper preservation box of claim 8, wherein the rolled edge (12) is spiral as a whole in the longitudinal cross section direction.
